# EUROPEAN PATENT APPLICATION

(11) **EP 3 376 121 A1**
(43) Date of publication of application: **19.09.2018**
(21) Application number: 17161667.5
(22) Date of filing: 17.03.2017
(51) Int. Cl.: F24D 19/10, F25B 13/00, F25B 40/04, F28D 20/02

(54) **HEAT EXCHANGE DEVICE AND METHOD FOR OPERATING A HEAT EXCHANGE DEVICE**

(71) Applicant: Sharp Kabushiki Kaisha, Sakai-shi Osaka 590-8522 (JP)
(72) Inventor: Tomlin, Michael Charles, Oxford, OX4 4GB (GB)
(74) Representative: Müller Hoffmann & Partner

(57) **Abstract**

A heat exchange device (100) comprises a first heat exchanger unit (110), a second heat exchanger unit (120), at least a first conditioning device (130) and at least a second conditioning device (140), and a heat exchange circuit (150) for guiding a process fluid through the heat exchange circuit (150). Here, the heat exchange circuit (150) connects the first heat exchanger unit (110) and the second heat exchanger unit (120) with the conditioning devices (130, 140). The heat exchange circuit (150) comprises a tee (160) that connects the first heat exchanger unit (110) with the second heat exchanger unit (120). The first conditioning device (130) and the second conditioning device (140) are connected such to the heat exchange circuit (150) that in operating the heat exchange device (100) at the first conditioning devices (130) receives process fluid that has exchanged heat in one of the first heat exchanger unit (110) and the second heat exchanger unit (120), while the second conditioning device (140) receives process fluid that has exchanged heat in both of the first heat exchanger unit (110) and the second heat exchanger unit (120).

## Description

### TECHNICAL FIELD

This invention relates to a heat exchange device and a method for operating heat exchange devices. Here, the heat exchange device may comprise vapor-compression heat pump systems where the heat pump comprises a refrigerant circuit supplying a refrigerant to heat exchanger units, such as a desuperheater, which permits heating of a secondary load or process fluid circuit to an outlet temperature that is substantially above the saturated vapor temperature of the refrigerant.

### BACKGROUND ART

In many buildings there exists a need to maintain the temperature of a hot water tank and a conditioned space simultaneously. It is well understood that the performance of a heat pump necessarily decreases with increasing condensing temperature due to the conservation of entropy during the refrigerant compression process. Therefore it is most efficient to operate the heat pump at the lowest possible condensing temperature at all times. As a heat storage, such as a hot water tank, is commonly maintained at a higher temperature than the surfaces which heat a conditioned space, it is common practice to alternate operation between tank and space heating to optimize performance. Such operation requires the average space heating temperature to be increased as the operating hours are reduced, and it requires the condensing temperature of the heat pump to reach the level required of the tank storage.

Desuperheaters are known in the prior art as devices for efficiently transferring the sensible heat of compression, which has a higher temperature than the saturated vapor, to a heat load such as a hot water tank. As a separate heat exchanger to a condenser, a desuperheater can be used to heat a tank circuit independently of a space heating circuit.

EP 0 134 015 B1, EP 2 388 530 A2, US 4 646 537 A all describe heat pump systems which incorporate a desuperheater in their refrigeration circuits, in which a refrigerant exchanges heat in contra-flow with a circulating process fluid. The fluid that cools the desuperheater and heats the tank does not mix with the fluid that cools the condenser, principally to permit the roles of the evaporator and condenser to be reversed such that the heat pump can either add or remove heat from a conditioned space.

US 4 796 437 A also discloses a reversible heat pump cycle that incorporates a three-way heat exchanger that permits air and a pumped fluid to cool the condenser simultaneously. The pumped fluid then circulates through the desuperheater. The condenser and desuperheater fluids are not mixed.

US 5 465 588 A describes a heat pump system which directs a fraction of the fluid from a hot water tank through a condenser and a remainder through a desuperheater. The outlets of each heat exchanger are then mixed together.

### SUMMARY OF INVENTION

A heat exchange device comprises a first heat exchanger unit and a second heat exchanger unit, at least a first conditioning device and at least a second conditioning device, and a heat exchange circuit for guiding a process fluid through the heat exchange circuit. Here, the heat exchange circuit connects the first heat exchanger unit and the second heat exchanger unit with the conditioning devices. The heat exchange circuit comprises a tee that connects the first heat exchanger unit with the second heat exchanger unit. The first conditioning device and the second conditioning device are connected to the heat exchange circuit such that in operating the heat exchange device the first conditioning device receives process fluid that has exchanged heat in one of the first heat exchanger unit and the second heat exchanger unit, while the second conditioning device receives process fluid that has exchanged heat in both of the first heat exchanger unit and the second heat exchanger unit.

According to such a setup of a heat exchange circuit in a heat exchange device it is ensured that although two heat exchanger units, such as a condenser and a desuperheater, are present, heat of one of these heat exchanger units is only transferred to one conditioning device in the heat exchange circuit, while heat from both heat exchanger units is transferred to other conditioning devices. Due to this, it is possible to operate two heat exchanger units, such as a condenser and a desuperheater, at different temperatures such that two different conditioning devices, such as a space heating emitter circuit and heat storage device, can be brought to different temperatures.

Hence, the arrangement allows operating the heat exchanger units at their respective optimal processing temperatures together with setting different temperatures to different conditioning devices.

In addition, by using a tee to connect the connecting portion between the two heat exchanger units with the rest of the heat exchange circuit, a simplification of the setup of the heat exchange circuit can be achieved, while the aforementioned effect can still be maintained.

An outlet of the first heat exchanger unit for the process fluid, an inlet of the second heat exchanger unit for the process fluid, and an inlet of a first conditioning device of the at least two conditioning devices may be connected to the tee. In addition, an outlet of the second heat exchanger unit for the process fluid may be connected to an inlet of a second conditioning device of the at least two conditioning devices, and an outlet of the first conditioning device and an outlet of the second conditioning device may be connected via a common section of the heat exchange circuit to the inlet of the first heat exchanger unit for the process fluid.

By this connection, a process fluid, for example a gas or a liquid such as water or a thermal oil, which is used to transport heat in the heat exchange circuit can be guided such through the heat exchange circuit that in a single circulation it passes either one heat exchanger unit and one of the two conditioning devices, or both heat exchanger units and the other of the two conditioning devices.

For example, the process fluid may flow via its inlet into the first heat exchanger unit, e.g. a condenser, and gets, after passing through it, divided by the tee. Along a first flow path the process fluid flows through the first conditioning device, e.g. a space heating device or space heating emitter circuit, and then back to the inlet of the first heat exchanger unit. Along a second flow path the process fluid flows through the second heat exchanger unit, e.g. a desuperheater, then through the second conditioning device, e.g. a heat storage device, and hereafter it joins the first flow path in the common section and is guided back to the inlet of the first heat exchanger unit. Accordingly, only heat from the first heat exchanger unit is transferred to the first conditioning device, while heat from both heat exchanger units is transferred to the second conditioning device.

Another example would be that the process fluid streams via the tee from the first conditioning device into the two heat exchanger units. Along a first flow path it flows then through the first heat exchanger unit and the first conditioning device back to the tee. Along a second flow path it flows through the second heat exchanger unit and the second conditioning device, and joins the first flow path before it flows via the first conditioning device back to the tee. Accordingly, the second conditioning device receives only heat from the second heat exchanger unit, while the first conditioning device receives heat from both heat exchanger units.

Various similar configurations of flow directions and locations of the conditioning devices with respect to the heat exchanger units and the tee can be conceived by a person skilled in the art. Hence, the exact arrangement of the conditioning devices, the tee, and the heat exchanger units within the heat exchange circuit are not essential. It is of only importance that by the connection of the tee between the heat exchanger units and the - in principle arbitrary - location of the conditioning devices and direction of process fluid flow, it is guaranteed that at least one conditioning device receives only process fluid that did undergo heat exchange in just one of the heat exchanger units during its last circulation through the heat exchange circuit. This, however, can be achieved with various geometries of the heat exchange circuit.

To this end also more than just two heat exchanger units and more than just two conditioning devices may be connected by the heat exchange circuit, as long as a separation of the process fluid is achieved that allows transferring of the heat exchanged in at least some of the heat exchanger units separately to only a part of the conditioning devices.

Further, reference to "inlet" or "outlet" of a unit above does not imply a restriction of the flow direction, but is only intended to denote that the unit does have two entries for the process fluids. Hence, process fluid may flow into the unit through an "outlet" and leave the unit through an "inlet". Further, each element connected to the heat exchange circuit may comprise several sub-units that are of equal, similar, or distinct type. For example, the first and second heat exchanger units may comprise a plurality of different heat exchangers that are connected in series or in parallel to each other. Similarly, also each conditioning device may comprise a plurality of conditioning elements, such as heaters, air conditioning systems, heat storages, and the like, that may be connected in series or in parallel. For such combined elements the terms "inlet" and "outlet" refer to the portions of these elements through which the process fluid enters the element first and leaves the element last, respectively.

At least one pump may be arranged within the heat exchange circuit that is configured to generate a flow of the process fluid from the outlet of the first conditioning device and the outlet of the second conditioning device towards the inlet of the first heat exchanger unit. By the provision of such a pump it is ensured that a flow is generated in the heat exchange circuit that transports heat from the first heat exchanger unit to both conditioning devices, while heat from the second heat exchanger unit is only transferred to the second conditioning device.

Here, it should be noted that the pump(s) must not necessarily be arranged within the common section of the heat exchange circuit that leads from the outlets of the conditioning devices to the inlet of the first heat exchanger unit. Together with accordingly arranged valves, such as non-return valves, control valves, and the like, also pump(s) located in different sections of the heat exchange circuit may be used to establish the desired flow.

The heat exchange device may comprise at least one flow rate sensor and/or at least one temperature sensor that are arranged within the heat exchange circuit, and configured to monitor the flow rate and/or the temperature of the process fluid, respectively. Using such sensors the heat exchange state of the heat exchange device can be measured, as by knowing flow rate and temperature of the process fluid the transport of heat through the system can be determined. To this end, flow rate sensor(s) and temperature sensor(s) may be arranged within the heat exchange circuit wherever necessary, to monitor e.g. flow and temperature of the process fluid before and after the heat exchanger units and/or the conditioning devices or within these elements of the heat exchange device.

Here, it may be sufficient to monitor flow rate and temperature not everywhere in the heat exchange circuit, but only at specific positions that allow determining the distribution of heat throughout the heat exchange circuit. Preferably, the flow rate and temperature measurements allow determining the distribution of exergy, i.e. the heat potential that allows causing a change to the surroundings or the heat quality, in particular of the temperature relative to an ambient state. Which positions these are will depend on the geometry of the heat exchange circuit and the devices connected to it.

The heat exchange device may comprise at least one non-return valve that is arranged within the heat exchange circuit, and configured to guide the process fluid through the heat exchange circuit along a predetermined flow path. By applying non-return valve(s) within the heat exchange circuit the flow direction of the process fluid can be defined.

The heat exchange device may comprise at least one control valve that is arranged within the heat exchange circuit, and configured to control a flow of the process fluid through the heat exchange circuit. By a control valve not only the flow direction, but also the flow rate of the process fluid can be defined. This allows varying the throughput of process fluid through specific sections of the heat exchange circuit in order to ensure that heat is differently distributed to different conditioning devices.

The heat exchange device may comprise a heating unit for heating the process fluid before it enters the first heat exchanger unit and the second heat exchanger unit. This preheating of the process fluid allows supplementary heat to be added to the circuits to increase the overall output capacity or to reduce the output capacity required from the refrigeration circuit.

The first conditioning device may be a space heating emitter circuit, and the second conditioning device may be a heat storage device, comprising for example a heat storage vessel, a thermal store, an auxiliary heat exchanger and a water vessel, and/or a heat storage vessel that comprises a phase change material. This allows setting up of a heat exchange circuit that brings a space heating emitter circuit to a different temperature than a heat storage material inside a heat storage device.

The heat exchange device may comprise a refrigerant circuit for circulating a refrigerant through the first heat exchanger unit and the second heat exchanger unit, wherein the first heat exchanger unit is configured to transfer heat from the refrigerant to the process fluid, and the second heat exchanger unit is configured to transfer heat from the refrigerant to the process fluid. In this setup heat is transferred in both heat exchanger units into the process fluid. The first heat exchanger unit may be a condenser, while the second heat exchanger unit may be a desuperheater.

The heat exchange device may comprise a refrigerant circuit for circulating a refrigerant through the first heat exchanger unit and the second heat exchanger unit, wherein the first heat exchanger unit is configured to transfer heat from the process fluid to the refrigerant, and the second heat exchanger unit is configured to transfer heat from the refrigerant to the process fluid. In this setup the first heat exchanger unit is used to cool the process fluid. Hence, the first conditioning device may for example be a fan coil unit for cooling an air-flow. From the tee the cooled process fluid is guided into the second heat exchanger unit where it is heated in order to transfer heat to the second conditioning device, e.g. a heat storage device. Therefore, while using only one heat exchange circuit it is possible to cool a first conditioning device and to heat a second conditioning device.

The heat exchange device may comprise a 4-way reversing valve that is configured to switch a flow path of the refrigerant through the refrigerant circuit between the two modes described above. This allows flexible switching between heating and cooling of the first conditioning device, i.e. for example of a reversible air conditioning unit.

The refrigerant circuit may comprise an expansion valve, a third section running through a third heat exchanger unit, a compressor, a first section running through the first heat exchanger unit, and a second section running through the second heat exchanger unit. This allows effective transfer of heat from the refrigerant circuit into the heat exchange circuit.

In the first mode the refrigerant may circulate through the expansion valve, the third section, the compressor, the second section, and the first section in this order, while in the second mode the refrigerant may circulate through the expansion valve, the first section, the compressor, the second section and the third section in this order. Hence, by using the 4-way reversing valve, the first heat exchanger unit can be changed from means for transferring heat from the refrigerant circuit into the heat exchange circuit into means for transferring heat from the heat exchange circuit into the refrigerant circuit, which allows flexible adaption of heat in the first conditioning device.

The heat exchange device may comprise a controller unit for controlling the operation of the heat exchange device. By using the controller unit for controlling the various parameters of the heat exchange device, such as flow rates and temperature of refrigerant and process fluid, valve positions, pump rates, and the like, it is possible to adjust in a flexible manner the temperatures of the conditioning devices of the heat exchange device, while maintaining the temperatures of the refrigerant and the process fluid in ranges in which the heat exchanger units and the refrigerant circuit can be operated effectively.

A heat exchange method for operating a heat exchange device comprises: guiding a process fluid through a heat exchange circuit that connects a first heat exchanger unit and a second heat exchanger unit with at least two conditioning devices, wherein the process flow is guided through a tee that connects the first heat exchanger unit with the second heat exchanger unit such that at least one of the conditioning devices receives only process fluid that has exchanged heat in one of the first heat exchanger unit and the second heat exchanger unit, while the remaining ones of the conditioning devices receive process fluid that has exchanged heat in both of the first heat exchanger unit and the second heat exchanger unit.

The heat exchange device may comprise as refrigerant circuit a vapor-compression heat pump circuit consisting in sequential order of a compressor, second heat exchanger section, first heat exchanger section, expansion valve, and third heat exchanger section in an evaporator, and as a heat exchange circuit a pumped process fluid circuit comprising as conditioning devices two heat loads arranged in parallel and consisting e.g. of space heating emitters and a heat storage vessel (e.g. a hot water tank), respectively. The returning process fluid from each heat load is mixed together and pumped into the first heat exchanger in contra-flow to the refrigerant. A fraction of the process fluid leaving the first heat exchanger unit is directed back to the space heating emitters constituting the first conditioning device via the tee, whilst the remaining fraction, which is substantially smaller than the first fraction, proceeds through the second heat exchanger unit in contra-flow to the refrigerant discharged from the compressor. Heated process fluid leaving the second heat exchanger unit is then directed to the heat storage vessel constituting the second conditioning device.

Effective contra-flow heat transfer through the first heat exchanger unit ensures that the process fluid entering the second heat exchanger unit has a temperature which approximates to the saturated vapor or 'condensing' temperature. As such the fraction of process fluid entering the second heat exchanger unit has negligible potential to cool the refrigerant entering the first heat exchanger unit below the condensing temperature. This invention thereby maximizes heat transfer of discharge superheat to the minor process fluid fraction whilst simultaneously ensuring that refrigerant of almost 100% quality (vapor fraction) is transported between the first and second heat exchangers and can be distributed evenly across all parallel channels of the first heat exchanger unit. Even distribution of vapor maximizes the heat exchanger effectiveness by increasing the area over which condensation can occur.

To the accomplishment of the foregoing and related ends, the invention, then, comprises the features hereinafter fully described and particularly pointed out in the claims. The following description and the annexed drawings set forth in detail certain illustrative embodiments of the invention. These embodiments are indicative, however, of but a few of the various ways in which the principles of the invention may be employed. Other objects, advantages and novel features of the invention will become apparent from the following detailed description of the invention when considered in conjunction with the drawings.

### BRIEF DESCRIPTION OF DRAWINGS

**Fig. 1** is a schematic diagram of a heat exchange device according to an embodiment of the present invention.
**Fig. 2** is a schematic diagram of a heat exchange device according to an embodiment of the present invention.
**Fig. 3** is a schematic diagram of a heat exchange device according to an embodiment of the present invention.
**Fig. 4** is a schematic diagram of a heat exchange device according to an embodiment of the present invention.
**Fig. 5** is a schematic diagram of a heat exchange device according to an embodiment of the present invention.

### DETAILED DESCRIPTION OF INVENTION

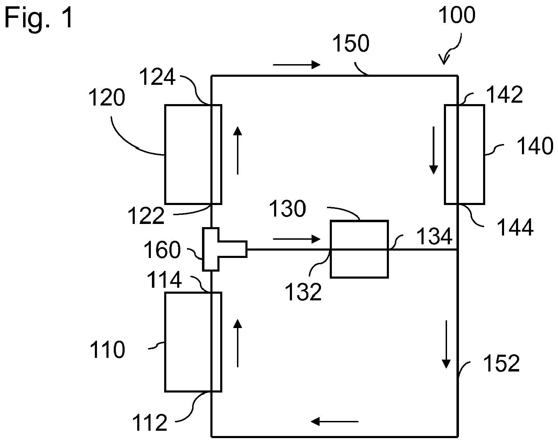

An embodiment of a heat exchange device according to the present invention is schematically illustrated in Fig. 1. The heat exchange device 100 of Fig. 1 comprises a first heat exchanger unit 110, a second heat exchanger unit 120, a first conditioning device 130, a second conditioning device 140, and a heat exchange circuit 150 that comprises a tee 160. The first heat exchanger unit 110, the second heat exchanger unit 120, the first conditioning device 130, and the second conditioning device 140 are connected by the heat exchange circuit 150.

In operation of the heat exchange device 100 a process fluid flows through the heat exchange circuit 150 and is distributed by the heat exchange circuit 150 to the heat exchanger units 110, 120, and the conditioning devices 130, 140.

In the heat exchanger units 110, 120, heat is transferred between the process fluid and a refrigerant (not shown) that runs through the heat exchanger units 110, 120 simultaneously with the process fluid. Accordingly, each heat exchanger unit 110, 120 has four entry portions: an inlet and an outlet for the process fluid, and an inlet and an outlet for the refrigerant. Inside the heat exchanger units 110, 120, the process fluid and the refrigerant run in close contact to each other such that heat can be transferred between these fluids. Preferably, refrigerant and process fluid flow in opposite directions and do not mix with each other. As such heat exchanger units are well known, a further detailed explanation of their functioning is omitted here. In principle, any type of heat exchanger unit may be used.

The heat exchanger units 110, 120 may function as heat sources and/or heat sinks for the process fluid. This means that heat can be transferred from the refrigerant to the process fluid or from the process fluid to the refrigerant in each of the heat exchanger units 110, 120.

In the conditioning devices 130, 140 heat is transferred between the process fluid and surroundings. The surroundings may be ambient air, if the conditioning device is e.g. a space heating device or an air conditioner. The surrounding may also be water or any other suitable heat storage material that is able to store and release heat, like e.g. a phase change material such as paraffin. Hence, also the conditioning devices 130, 140 may be considered as heat sources and/or heat sinks. The difference between the heat exchanger units 110, 120 and the conditioning devices 130, 140 may be considered to be that the heat exchanger units 110, 120 exchange heat between the refrigerant circulating in a substantially closed refrigerant circuit and the process fluid circulating in the substantially closed heat exchange circuit 150, while the conditioning devices 130, 140 exchange heat between the closed heat exchange circuit 150 and substantially open systems such as ambient air, the water circulation of a building, a large heat storage, or the like.

By circulating the process fluid through the heat exchange circuit 150 the temperature of the conditioning devices 130, 140 can be changed due to the heat transferred by the process fluid.

The first heat exchanger unit 110 and the second heat exchanger unit 120 are, preferably directly, connected by the tee 160 of the heat exchange circuit 150. The conditioning devices 130, 140 and the rest of the heat exchange circuit 150 are arranged such that during a single circulation of the process fluid through the heat exchange circuit 150, i.e. during the time a given volume element of the process fluid needs to flow once through the heat exchange circuit 150 to reach again its starting position, one conditioning device receives only process fluid that has undergone heat transfer in one of the two heat exchanger units 110, 120, while the other conditioning device receives process fluid that has passed through both heat exchanger units 110, 120.

An exemplary configuration of heat exchange devices 100 that allow achieving this effect is illustrated in Fig. 1. Here, a specific setup of the heat exchanger units 110, 120, the conditioning devices 130, 140, and the heat exchange circuit 150 is illustrated with specific flow directions of the process fluid through the single parts of the heat exchange device 100. This does, however, not mean that the illustrated setup is the only setup that allows achieving the above result. Many other variations may be implemented, in particular setups including a more complex heat exchange circuit 150 having more components than illustrated in Fig. 1. In this regard, the heat exchange circuit 150 illustrated in Fig. 1 may be considered to be a part of a more complex heat exchange system involving further heat exchanger units and/or further conditioning devices. But even in the illustrated heat exchange circuit 150 additional heat exchanger units and/or conditioning devices may be arranged.

As illustrated exemplarily in Fig. 1 an outlet 114 of the first heat exchanger unit 110 for the process fluid, an inlet 122 of the second heat exchanger unit 120 for the process fluid and an inlet 132 of the first conditioning device 130 are connected to the three ends of the tee 160. The outlet 124 of the second heat exchanger unit 150 is connected to the inlet 142 of the second conditioning device 140. The outlet 144 of the second conditioning device 140 and the outlet 134 of the first conditioning device 130 are connected via a common section 152 to the inlet 112 of the first heat exchanger unit 110.

In Fig. 1 flow of the process fluid is adjusted as indicated by the arrows of Fig. 1. This means that process fluid enters from the common section 152 into the first heat exchanger unit 110. After exchanging heat with a refrigerant in the first heat exchanger unit 110 the process fluid is split by the tee into two flow paths. Here, the part of the process fluid that flows from the tee 160 towards the second heat exchanger unit 120 may be smaller than the part of the process fluid that flows towards the first conditioning device 130.

Along the first flow path the process fluid passes the first conditioning device 130 and exchanges therein heat. Then, the process fluid flows back via the common section 152 towards the inlet 112 of the first heat exchanger unit 110. The second flow path leads through the second heat exchanger unit 120, where the process fluid undergoes heat exchange before it is guided through the second conditioning device 140. After passing the second conditioning device 140 the second flow path joins the first flow path in the common section 152.

Accordingly, while the first conditioning device 130 obtains only process fluid that has passed only through the first heat exchanger unit 110, the second conditioning device 140 obtains process fluid that has passed through both, the first heat exchanger unit 110 and the second heat exchanger unit 120. Hence, the two conditioning devices 130, 140 can be heated to different temperatures without interrupting one flow path completely. Moreover, due to the possibility of separate heat transfer in the first heat exchanger unit 110 and the second heat exchanger unit 120 it is possible to adjust the process fluid in the heat exchanger units 110, 120 to such temperatures that make heat exchange most efficient.

Again, it should be noted that various other configurations may be conceived that allow associating the heat transfer of one heat exchanger unit to one conditioning device, while the other conditioning device(s) are supplied with process fluid that passes through all heat exchanger units.

The direction of the flow, the adjustment of the temperature of the process fluid, the refrigerant circuit used to transfer heat to the process fluid, the control of parameters of the heat exchange device, and the like may be adjusted and/or obtained in various manners, preferably by using a controller unit 2 for the heat exchange device. Some examples thereof will be described in the following.

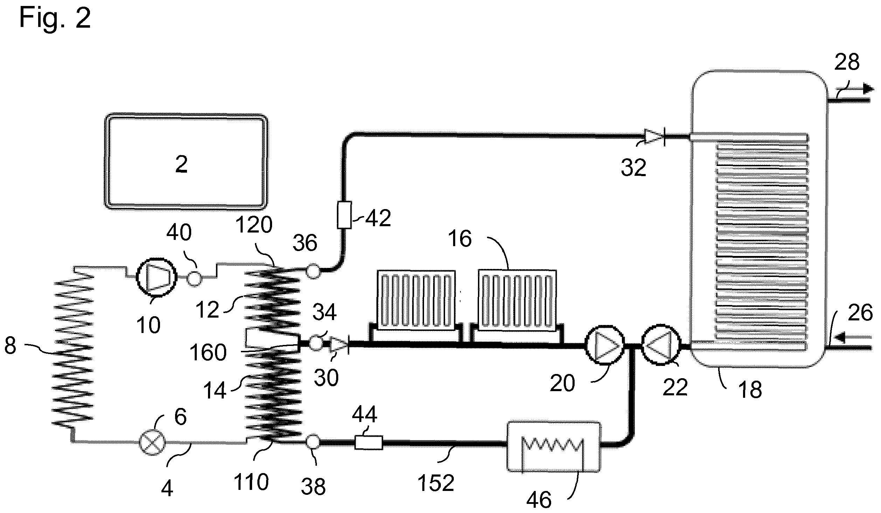

Fig. 2 schematically illustrates in more detail a heat exchange device as discussed above. The heat exchange device of Fig. 2 comprises a controller unit 2 that regulates the heat exchange device. The heat exchange device comprises further a heat pump 4 constituting a refrigerant circuit, and circulation pumps 20, 22 and a heating device 46 such as a backup heat source in the heat exchange circuit 150.

The heat pump 4 incorporates a compressor 10 and an expansion valve 6 for transferring heat from a third heat exchanger unit constituted e.g. by an evaporator through which a third section 8 of the refrigerant circuit runs to the first heat exchanger unit 110 and the second heat exchanger unit 120 via a first section 14 and a second section 12 of the refrigerant circuit, respectively. By the heat pump 4 a refrigerant (fluid) is circulated in the manner of a vapor-compression cycle through the refrigerant circuit.

As a first conditioning device 130 a multitude of radiating devices 16 of a space heating emitter circuit and as a second conditioning device 140 a hot water tank 18 may be heated by a process fluid flowing through the heat exchange circuit 150. The process fluid may be water, which may or may not contain trace substances for the purpose of inhibiting scale or corrosion. The process fluid may also be any other fluid suitable for heat transfer such as thermal oil. The heat exchange circuit 150 may be commissioned with a static pressure of at least 1.5 bar gauge to ensure that the process fluid, e.g. water, cannot boil in the heat exchanger units 110, 120, in particular if they are formed as desuperheater.

At the start of a cycle in the refrigerant circuit a refrigerant is expanded by the expansion valve 6, which may be electronically-controlled, to drop the evaporating temperature of the refrigerant such that it can absorb heat from a source fluid by evaporating the refrigerant in the third section 8 within the third heat exchanger unit constituted e.g. by an evaporator. The refrigerant vapor is subsequently compressed by the compressor 10 and discharged in series through the second section 12 and the first section 14 of the refrigerant circuit that run through the second heat exchanger unit 120 and the first heat exchanger unit110, respectively. Here, the first heat exchanger unit 110 may be termed "condenser" and the second heat exchanger unit 120 may be termed "desuperheater".

In the heat exchange circuit 150 a first circulation pump 20 directs the process fluid through an array of the radiating devices 16 such as convector radiators which may be connected together in series or in parallel and which constitute the first conditioning device 130. A second circulation pump 22 directs the process fluid through hot water tank 18 constituting the second conditioning device 140, e.g. though a coil which is welded inside the hot water tank 18 and exiting the tank at outlet 144 being lower than inlet 142. The process fluid from both pumps 20 and 22 is combined in a tee, permitting the temperature to equalize to a point that is dependent upon the relative flow rate through each pump.

A feature of mixing the two return flows is that as the common section 152 only a single return pipe is required to travel from the conditioning devices 130, 140, which may be heat loads such as the radiating devices 16 and the tank 18, towards the heat exchanger units 110, 120. This is advantageous for many installations where it is desirable or necessary to site the refrigerant circuit or heat pump 4 far from the pre-existing hydronic connections to the heat loads, or through an exterior wall, such as is required for air-source heat pumps.

The mixed process fluid may be directed through a heating device 46 such as a backup heater which is preferably a resistive electric element with a very high surface area in contact with the process fluid. The controller unit 2 may choose to switch on the heating device 46 if the heat pump 4 cannot be operated or cannot supply sufficient heat to the radiating devices 16 and/or the hot water tank 18. Upon exiting the heating device 46, the mixed process fluid is measured by a flow rate sensor 44 and a temperature sensor 38, before entering the condenser constituting the first heat exchanger unit 110.

Through the condenser the mixed processing fluid travels in contra-flow to the refrigerant, approaching the condensing temperature of the refrigerant as the refrigerant condenses to a saturated liquid state. The process fluid exiting the condenser is measured by a temperature sensor 34 before entering the tee 160 out of which a first fraction returns to the radiating devices 16 and a second, remaining fraction enters the desuperheater constituting the second heat exchanger unit 120. Note that this is only illustrated schematically in Fig. 2. The first process fluid fraction is then directed through a non-return valve 30 which prevents the flow of process fluid from the tank 18 from entering the desuperheater directly via the radiating devices 16. The first process fluid fraction is directed back to the radiating devices 16 where heat may be dissipated to a multitude of indoor spaces such as a residential building. The heating of the process fluid that has returned via the common section 152 by a single heat exchanger unit 110 such as the condenser is advantageous over systems which heat e.g. the heating and hot water circuits in separate condensers due to the saving in components. The desuperheater can remain smaller than the condenser due to the smaller fraction of sensible superheat relative to the latent heat available from the refrigerant.

Through the desuperheater the second process fluid fraction travels in contra-flow to the refrigerant, approaching the discharge temperature of the refrigerant as the refrigerant is sensibly cooled towards a saturated vapor state. By pre-heating the second fraction of the process fluid through the condenser, the potential for this fraction of process fluid to condense the refrigerant within the desuperheater is minimized, thus ensuring that the quantity of liquid refrigerant entering the condenser is also minimized. The advantages of minimizing refrigerant liquid at the entry of the condenser are to permit an even distribution of gas across all parallel channels of the heat exchanger and to ensure effective drainage of liquid refrigerant back to the expansion valve 6.

The second process fluid fraction leaving the desuperheater is measured by a temperature sensor 36 and a flow rate sensor 42 before entering a non-return valve 32. The non-return valve 32 prevents undesirable flow of process fluid from the radiating devices 16 through the hot water tank 18 and, in so doing, from bypassing the condenser. The second process fluid fraction may then for example be directed into the higher port of a heat exchanger that is welded within the hot water tank 18 where heat is dissipated to stored water. In common with standard design for domestic hot water tanks, cold water 26 is supplied to the tank at a low point and drawn off the tank at a high point 28.

The controller unit 2 may calculate a target heat output of the condenser and desuperheater from the temperature sensors 34, 36, 38 and flow sensors 42, 44 and adjusts the signals to each of the circulation pumps 20 and 22 to match the measured output to the radiating devices 16 and to the hot water tank 18 to the target output for each heat load or conditioning device.

The desuperheater and condenser are preferably microchannel brazed plate heat exchangers which offer a very large heat transfer surface area relative to the pressure loss imposed on either the refrigerant circuit or the heat exchange circuit.

A discharge temperature sensor 40 is attached to the refrigerant discharge pipe between the compressor 10 and the second section 12 of the refrigerant circuit. The discharge sensor 40 may be used by the controller unit 2 to prevent excessive compressor temperatures which may cause lubricants to escape the compressor.

Each of the circulation pumps 20 and 22 may preferably incorporate variable speed motors which are regulated by the controller unit 2 using a low voltage analog signal.

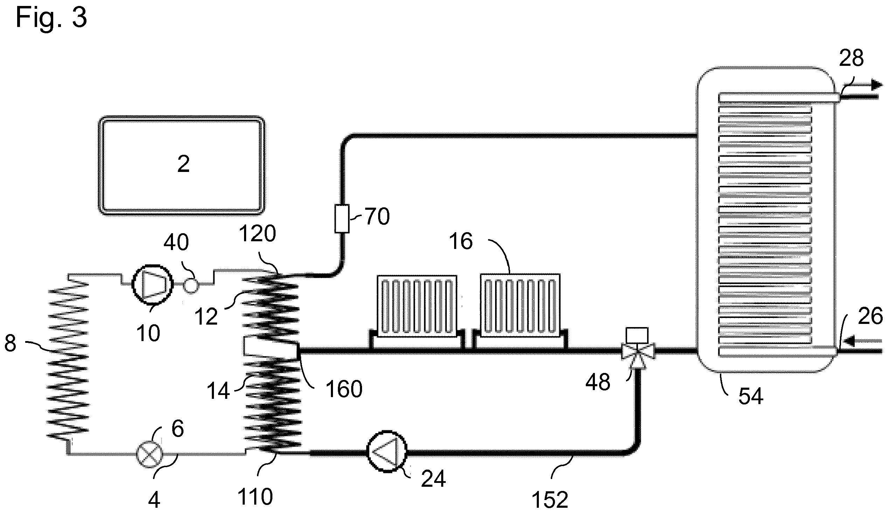

Fig. 3 schematically illustrates another example of a heat exchange device as discussed with reference to Fig. 1. Also in the heat exchange device of Fig. 3 a heat pump 4 is provided that heats a first fraction of a process fluid which can be circulated through a network of radiating devices 16 constituting the first conditioning device 130 and a second fraction of the process fluid which can be simultaneously circulated through a thermal store 54 constituting the second conditioning device 140. The process fluid is preferably water. However, also other process fluids such as thermal oils may be used.

In this embodiment the volumetric flow rate of the process fluid through the radiating devices 16 and through the thermal store 54 is regulated by a single pump 24 which is situated on common section 152 of the heat exchange circuit 150, in which mixed process fluid is guided via a return line to the condenser constituting the first heat exchanger unit 110, and a motorized blending valve 48 which is situated between the outlet 134 of the radiating devices 16 and the outlet 144 of the thermal store 54. The blending valve 48 may be electronically controlled by the system controller unit 2 to balance the heat output to the radiating devices 16 and the thermal store 54 according to their relative heat demands.

Situated between the desuperheater constituting the second heat exchanger unit 120 and the thermal store 54 a flow switch 70 compares the flow rate of the second fraction of the process fluid to a pre-set reference. When simultaneous heating of the radiating devices 16 and the thermal store 54 is required, the controller unit 2 adjusts the signal to the blending valve 48 to maintain the flow rate through the desuperheater constituting the second heat exchanger unit 120 that matches the pre-set reference of the flow switch 70. This is achieved by adjusting the valve signal up or down to maintain a time-averaged signal from the flow switch 70 that is between ON and OFF.

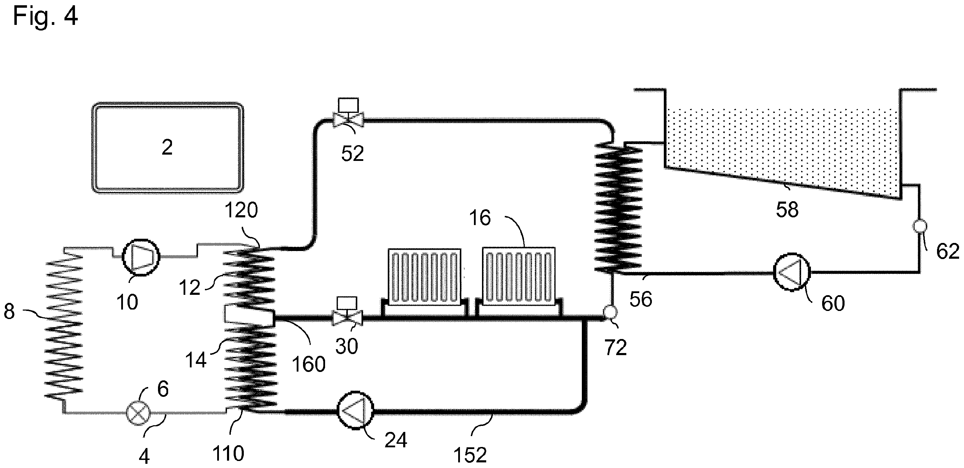

Fig. 4 illustrates another example of a heat exchange device as discussed with reference to Fig. 1. In the heat exchange device illustrated schematically in Fig. 4 a heat pump 4 heats a first fraction of a process fluid which can be circulated through a network of radiating devices 16 constituting the first conditioning device 130 and a second fraction of the process fluid which can be simultaneously circulated through a pool heat exchanger 56 constituting the second conditioning device 140. The process fluid is preferably water or thermal oil. The heat exchanger 56 is cooled by an auxiliary circuit connected to an open body of water 58 such as a swimming pool, spa, or 'hot tub'. The temperature of the water leaving the open body of water 58 is measured by a sensor 62 and maintained by a pump 60 which circulates the water through the pool heat exchanger 56.

Here, the volumetric flow rate of the process fluid through the radiating devices 16 and through the pool heat exchanger 56 is regulated by a single pump 24 which is situated in common section 152 of the heat exchange circuit 150, in which the mixed process fluid is guided via a return line to the condenser constituting the first heat exchanger unit 110, and a combination of two control valves 50 and 52. A first control valve 50 is situated between the condenser and the radiating devices 16 and is controlled by the system controller unit 2 to permit heated process fluid from the condenser to flow through the radiating devices when required. Similarly a second control valve 52 is situated between the desuperheater constituting the second heat exchanger unit 120 and the pool heat exchanger 56 and is controlled by the system controller unit 2 to permit heated process fluid from the desuperheater to flow through the pool heat exchanger 56 when required. The controller unit 2 regulates the second control valve 52 to regulate the temperature measured by a sensor 72. When the measured temperature at sensor 72 is below a target temperature defined by the controller unit 2 the control valve 52 opens, and vice versa. The circulation pump 24 is switched ON by the controller unit 2 either when a sufficient heat demand from the radiating devices 16 is reached or when the pool heating return temperature sensor 72 is below the target.

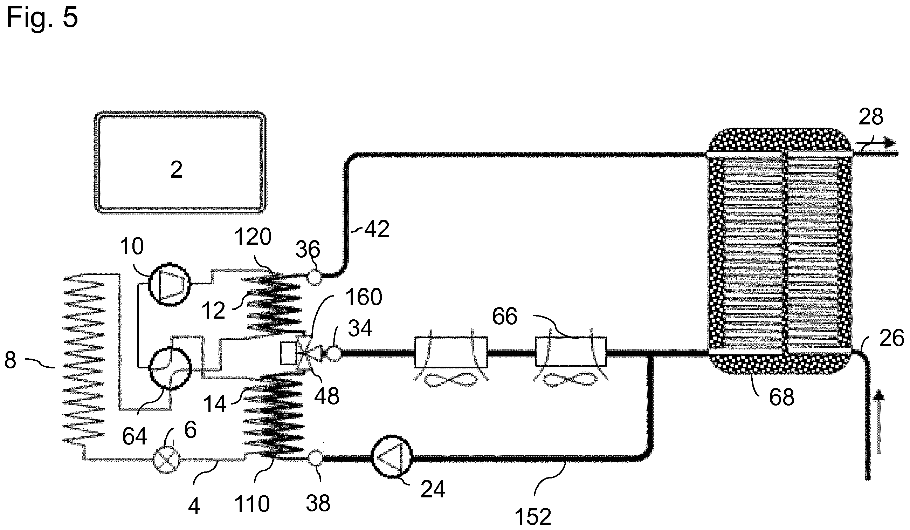

Fig. 5 illustrates another example of a heat exchange device as discussed with reference to Fig. 1. In the heat exchange device illustrated schematically in Fig. 5 a heat pump 4 heats a first fraction of a process fluid which can be circulated through a network of fan coil units 66 constituting the first conditioning device 130 and a second fraction of the process fluid which can be circulated through a heat exchanger within a vessel containing a phase change material 68 such as paraffin constituting the second conditioning device 140. Heat may be recovered from the paraffin using a fluid 26 circulating through a secondary heat exchanger within the paraffin for hot water, space heating or other applications. The process fluid is preferably water or thermal oil.

The heat exchange device illustrated in Fig. 5 comprises a refrigeration circuit that also contains a 4-way reversing valve 64 which is arranged in the configuration illustrated e.g. in EP 0 134 015 B1 and permits the functions of the evaporator constituting the third heat exchanger unit and the condenser constituting the first heat exchanger unit 110 to be reversed such that heat can be extracted from the 'load' and rejected to the 'source' whilst the high temperature discharge heat of the refrigerant still travels through the second section 12 of the refrigeration circuit running through the desuperheater constituting the second heat exchanger unit 120. This design of heat pump 4 enables the heat exchange circuit 150 to perform either heating or cooling functions at the first conditioning device 130, whilst simultaneously supplying heat to the phase change material of the vessel 68 via the desuperheater.

In this embodiment the volumetric flow rate of process fluid through the network of fan coil units 66 and through the vessel 68 is regulated by a single pump 24 which is situated in common section 152 of the heat exchange circuit 150, in which the mixed process fluid is guided via return line to the condenser, and a motorized blending valve 48 which is situated at the tee 160 between the condenser and the desuperheater. The blending valve 48 is electronically controlled by the system controller unit 2 to balance the heat output to the fan coil units 66 and the vessel 68 according to their relative heat demands.

When simultaneous heating of the fan coils 66 and phase change material in the vessel 68 is required, the controller unit 2 adjusts the signal to the blending valve 48 to maintain the temperature measured by a sensor 36 at the outlet 124 of desuperheater to match a target temperature for heating the phase change material in the vessel 68. When the measured temperature 36 is above the target temperature defined by the controller unit 2 the blending valve 48 opens towards the desuperheater which increases the flow rate of the process fluid, and vice versa. If insufficient heat is supplied to the fan coil units 66, then the controller unit 2 will not permit the blending valve 48 to open further towards the desuperheater, so that the balance of heat output is prioritized towards space conditioning via the fan coil units 66.

The circulation pump 24 is switched ON by the controller unit 2 whenever a heating or cooling demand is determined by the controller.

Although the invention has been shown and described with respect to a certain embodiment or embodiments, equivalent alterations and modifications may occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein exemplary embodiment or embodiments of the invention.

In addition, while a particular feature of the invention may have been described above with respect to only one or more of several embodiments, such feature may be combined with one or more other features of the other embodiments, as may be desired and advantageous for any given or particular application.

### INDUSTRIAL APPLICABILITY

This invention may find applications in the fields of domestic, commercial and industrial building management systems. Specifically the invention is aimed at domestic building heating systems where both space heating and water storage heating are required.

## Claims

1. A heat exchange device (100), comprising:
a first heat exchanger unit (110) and a second heat exchanger unit (120);
at least a first conditioning device (130) and at least a second conditioning device (140); and
a heat exchange circuit (150) for guiding a process fluid through the heat exchange circuit (150), the heat exchange circuit (150) connecting the first heat exchanger unit (110) and the second heat exchanger unit (120) with the conditioning devices (130, 140); wherein
the heat exchange circuit (150) comprises a tee (160) that connects the first heat exchanger unit (110) with the second heat exchanger unit (120); and
the first conditioning device (130) and the second conditioning device (140) are connected to the heat exchange circuit (150) such that in operating the heat exchange device (100) the first conditioning device (130) receives process fluid that has exchanged heat in one of the first heat exchanger unit (110) and the second heat exchanger unit (120), while the second conditioning device (140) receives process fluid that has exchanged heat in both of the first heat exchanger unit (110) and the second heat exchanger unit (120).

2. The heat exchange device (100) according to claim 1, wherein
an outlet (114) of the first heat exchanger unit (110) for the process fluid, an inlet (122) of the second heat exchanger unit (120) for the process fluid, and an inlet (132) of a first conditioning device (130) of the at least two conditioning devices (130, 140) are connected to the tee (160);
an outlet (124) of the second heat exchanger unit (120) for the process fluid is connected to an inlet (142) of a second conditioning device (140) of the at least two conditioning devices (130, 140); and
an outlet (134) of the first conditioning device (130) and an outlet (144) of the second conditioning device (140) are connected via a common section (152) of the heat exchange circuit (150) to the inlet (112) of the first heat exchanger unit (110) for the process fluid.

3. The heat exchange device (100) according to any one of the preceding claims, wherein
at least one pump (20, 22, 24) is arranged within the heat exchange circuit (150) that is configured to generate a flow of the process fluid from the outlet (134) of the first conditioning device (130) and the outlet (144) of the second conditioning device (140) towards the inlet (112) of the first heat exchanger unit (110).

4. The heat exchange device (100) according to any one of the preceding claims, further comprising:
at least one flow rate sensor (42, 44) and/or at least one temperature sensor (34, 36, 38) that are arranged within the heat exchange circuit (150), and configured to monitor the flow rate and/or the temperature of the process fluid, respectively.

5. The heat exchange device (100) according to any one of the preceding claims, further comprising:
at least one non-return valve (30, 32) that is arranged within the heat exchange circuit (150), and configured to guide the process fluid through the heat exchange circuit (150) along a predetermined flow path.

6. The heat exchange device (100) according to any one of the preceding claims, further comprising:
at least one control valve (50, 52) that is arranged within the heat exchange circuit (150), and configured to control a flow of the process fluid through the heat exchange circuit (150).

7. The heat exchange device (100) according to any one of the preceding claims, further comprising:
a heating device (46) for heating the process fluid before it enters the first heat exchanger unit (110) and the second heat exchanger unit (120).

8. The heat exchange device (100) according to any one of the preceding claims, wherein
the first conditioning device (130) is a space heating emitter circuit (16).

9. The heat exchange device (100) according to any one of the preceding claims, wherein
the second conditioning device (140) is a heat storage device, comprising preferably a heat storage tank (18), a thermal store (54), a heat exchanger (56) and a water vessel (58), and/or a heat storage vessel (68) that comprises a phase change material.

10. The heat exchange device (100) according to any one of the preceding claims, further comprising:
a refrigerant circuit (4) for circulating a refrigerant through the first heat exchanger unit (110) and the second heat exchanger unit (120), wherein
the first heat exchanger unit (110) is configured to transfer heat from the refrigerant to the process fluid; and
the second heat exchanger unit (120) is configured to transfer heat from the refrigerant to the process fluid.

11. The heat exchange device (100) according to any one of claims 1 to 9, further comprising:
a refrigerant circuit (4) for circulating a refrigerant through the first heat exchanger unit (110) and the second heat exchanger unit (120), wherein
the first heat exchanger unit (110) is configured to transfer heat from the process fluid to the refrigerant; and
the second heat exchanger (120) unit is configured to transfer heat from the refrigerant to the process fluid.

12. The heat exchange device (100) according to any one of claims 1 to 9, further comprising:
a refrigerant circuit (4) for circulating a refrigerant through the first heat exchanger unit (110) and the second heat exchanger unit (120); and
a 4-way reversing valve (64) that is configured to switch a flow path of the refrigerant through the refrigerant circuit (4) between a first mode and a second mode; wherein
in the first mode
the first heat exchanger unit (110) is configured to transfer heat from the process fluid to the refrigerant; and
the second heat exchanger unit (120) is configured to transfer heat from the refrigerant to the process fluid; and
in the second mode
the first heat exchanger unit (110) is configured to transfer heat from the process fluid to the refrigerant; and
the second heat exchanger unit (120) is configured to transfer heat from the refrigerant to the process fluid.

13. The heat exchange device (100) according to claim 12, wherein
the refrigerant circuit (4) comprises an expansion valve (6), a third section (8) running through a third heat exchanger unit, a compressor (10), a first section (14) running through the first heat exchanger unit (110), and a second section (12) running through the second heat exchanger unit (120);
in the first mode the refrigerant circulates through the expansion valve (6), the third section (8), the compressor (10), the second section (12), and the first section (14) in this order; and
in the second mode the refrigerant circulates through the expansion valve (6), the first section (14), the compressor (10), the second section (12), and the third section (8) in this order.

14. The heat exchange device (100) according to any of the preceding claims, further comprising:
a controller unit (2) for controlling the operation of the heat exchange device (100).

15. A heat exchange method for operating a heat exchange device (100), the method comprising:
guiding a process fluid through a heat exchange circuit (150) that connects a first heat exchanger unit (110) and a second heat exchanger unit (120) with at least two conditioning devices (130, 140); wherein
the process flow is guided through a tee (160) that connects the first heat exchanger unit (110) with the second heat exchanger unit (120) such that at least one of the conditioning devices (130) receives only process fluid that has exchanged heat in one of the first heat exchanger unit (110) and the second heat exchanger unit (120), while the remaining ones of the conditioning devices (140) receive process fluid that has exchanged heat in both of the first heat exchanger unit (110) and the second heat exchanger unit (120).
